# EUROPEAN PATENT APPLICATION

(11) **EP 1 232 915 A2**
(43) Date of publication of application: **21.08.2002**
(21) Application number: 02003574.7
(22) Date of filing: 15.02.2002
(51) Int. Cl.: B60R 19/16, B60R 19/04, B60R 19/26, B60R 19/38

(54) **Bumper system**

(30) Priority: 16.02.2001 US 268925 P; 22.01.2002 US 349363 P
(71) Applicant: Bombardiers-Rotax GmbH, 4623 Gunskirchen (AT)
(72) Inventor: Zeppetzauer, Mario, 4020 Linz (AT)
(74) Representative: Patentanwälte Dr. Solf & Zapf

(57) **Abstract**

A rear-collision protection system is described. The rear-collision protection system is for a vehicle with a frame on which at least one rear wheel is disposed. The system includes at least one mounting (9a,9b,10a,10b) connectable to the frame, the mounting being pivotable about a first axis (A). It also includes at least one collision roller (7a,7b,8a,8b) supported on the at least one mounting, the collision roller being rotatable about a second axis. The collision roller is disposed adjacent to the rear wheel.

## Description

### Cross Reference to Related Applications

For priority, the present application relies on United States Provisional Patent Application Serial No. 60/268,925, entitled "Bumper System for Kart," which was filed on February 16, 2001, and United States Provisional Patent Application Serial No. 60/349,363, entitled "Bumper System," which was filed on January 22, 2002. Both applications are incorporated herein by reference.

### Field of the Invention

The present invention relates to a rear-collision protection system for vehicles that have at least one rear wheel. In particular, the invention is directed to vehicles that may be used for motor sports, where the rear bumper extends to the sides of the vehicle in the area of the rear wheels.

### Background of the Invention

Karts fall within a class of vehicles that are commonly used for motor sports. In particular, karts are small vehicles that have more than one rear wheel.

Typically, the bumpers that are connected rigidly to a kart's chassis functions as rear collision protection for the kart. Typically, such bumpers consist of a rigid tubular rear guard and extend across its width so as to overlap the rear wheels, at least in part.

It is also known to include a roll cage on karts to protect the driver of the vehicle. Such roll cages typically are assembled from plastic profile sections and surround the whole of the vehicle. Roll cages of this kind are used mainly for karts that operate on indoor tracks or in indoor racing environments.

In most instances, karts that are used for competition are only protected against collisions with other vehicles to a limited extent. For this reason, among others, it is possible that serious accidents may occur, especially if the front wheel of a following vehicle comes into contact with a rear wheel of the vehicle that is in front of it. Because of the particular kinetic and kinematic conditions at the point of contact between the two wheels, the front wheel of the rearmost vehicle is lifted, which may cause the rear vehicle to overturn or cartwheel.

Those skilled in the art have recognized that the front wheel of a following kart can be prevented from coming into contact with the rear wheel of the kart that is in front of it by a bumper system.

However, bumper systems that are known in the art typically are rigid and, for this reason among others, cannot absorb or dissipate impact energy efficiently (or at all). This applies both to the rotational energy of the front wheel of the following vehicle and to the translational energy of the following vehicle. The impact energy is transmitted directly to the vehicle that is in front and its driver. Under certain conditions, this can result in damage to vehicles and injuries to drivers.

Accordingly, a need has arisen for a bumper system that addresses the short-comings of bumper systems known in the prior art.

### Summary of the Invention

It is, therefore, one aspect of the present invention to eliminate the short-comings discussed above.

Accordingly, one aspect of the present invention is to provide a rear-collision protection system that prevents the front wheel of a following vehicle from colliding with a rear wheel of the vehicle that is in front of it.

It is also an aspect of the present invention to provide a rear-collision protection system that may, for the most part, absorb at least some of the impact energy experienced during a collision between two vehicles.

The present invention accomplishes these objectives, among others, by providing a bumper system that consists of at least one collision roller that has a horizontal axis of rotation. Moreover, the bumper system incorporates at least one collision roller that is able to rotate.

In particular, if a front wheel of a following vehicle collides with the collision roller, the roller not only prevents the front wheel of the rear vehicle coming into contact with the rear wheel of the front vehicle, it also ensures that the front wheel of the rear vehicle can roll freely on the collision roller. Accordingly, little if any vertical force component is generated. In other words, the front wheel of the rear vehicle is not likely to lift from the road surface.

Moreover, if the bumper consists of two collision rollers that are spaced apart, one above the other, then the front wheel of a following vehicle that strikes the rollers will be guided between the rollers. A two collision roller construction, therefore, is believed to be of even greater benefit by further reducing the possibility that the front wheel of the following vehicle will be lifted from the road surface.

The collision rollers may be mounted rigidly or flexibly on the chassis or frame of the vehicle. It is preferable that the collision rollers are mounted flexibly on the chassis or frame. To this end, it is preferred that the collision rollers be of a length that matches the width of the rear tires, so as to provide the best possible protection.

In order to prevent not only the following vehicle from running over the vehicle in front, but also to dissipate the impact energy more effectively, each rear wheel has at least one associated mounting for each collision roller. The mountings for the collision roller are installed so as to be able to pivot about a vertical axis, against a spring force. In other words, the mounting is flexible, which assists in deflecting imparted energy toward the rear-wheel drive shaft in the event of a collision. Accordingly, a first component of the impact energy is absorbed.

An additional component of the energy is captured in the next phase of the collision, where the collision rollers come into contact with the rear wheel, and the rear wheel works directly in conjunction with the front wheel of the rear vehicle. Whatever excess energy remains is then absorbed by the tires themselves as a result of compression.

It should be noted that even in this second phase of the collision, the wheels that collide do not lock. Instead, they roll freely on the collision rollers. As the kinematic relationships demonstrate, this also applies if the wheels that collide are of different diameters.

Preferably, die mountings are made of plastic or metal and are joined flexibly to the vehicle chassis. As has been discussed above, the mountings may be flexible enough to enable the collision rollers to come into contact with the rear wheel.

In one particularly advantageous design, each mounting consists of an elbow lever that is mounted flexibly on the vehicle chassis. Each elbow lever has at least two lever arms with at least one such lever arm supporting the collision roller. Another of the lever arms supporting a connecting tube for protecting the rear of the vehicle against collision. The connecting tube extends across the rear of the vehicle between lever arms located on opposite sides of the vehicle. It is contemplated that a pair of elbow levers may be associated with the rear wheels on one side of the vehicle are joined to a corresponding and opposite pair of elbow levers by a pair of connecting tubes. The ends of the tube are attached to the second arm of the elbow lever. These connecting tubes form an additional collision zone in the central rear area of the vehicle and are intended to absorb collision impacts in this area. So that as much impact energy as possible is absorbed in the event of a collision, it is preferred that the connecting tube be flexible. For this reason, among others, it is preferred that the tube be made of plastic.

Connecting two opposing angle arms by means of the connecting rube also means that, in the event of collision with a collision roller, the impact energy is distributed between the two elbow angles. If the collision is with one collision roller, not only will the elbow lever that is associated with this collision roller be pivoted in the direction of the rear wheel but, in addition, because the two opposing elbow levers are connected to each other through the connecting tube, the collision roller of the other rear wheel will also be pivoted, although in this case it will be pivoted away from the rear wheel.

In order to increase the bumper system's elasticity and, thus, its ability to absorb shocks, the elbow levers can be configured as leaf-spring units. In such a case, each elbow angle incorporates at least two angular leaf springs that are arranged parallel to each other.

In another embodiment, the collision rollers are secured to their mountings or elbow levers such that they are adjustable in an axial direction. In this way, the collision rollers may be adjusted to match different vehicle track widths, especially if the track width (i.e., the distance between the rear wheels) is modified in some way. In this way, the collision rollers may be adjusted to suit a particular racing track configuration and wheel configuration. Accordingly, at any time during operation of the vehicle, the rear wheels are always sufficiently overlapped or protected by the collision rollers without the collision rollers extending beyond the outer edge of the rear wheels by a distance more than is necessary.

The axial adjustability of the collision rollers can, for example, be effected by a spring clip that is arranged within the roller(s). Studs or pins that are secured to both ends of the clip fit into holes in the mounting, on one hand, and snap into corresponding holes in the collision roller on the other, thereby forming an interlocking connection that is effected by external force.

A plurality of holes that are identical (i.e., are matched to the diameter of the studs or pins) are disposed axially in the collision rollers. The distance from the particular collision roller to the vehicle can be increased or decreased, depending on the holes in which the studs or pins have been disposed, preferably through a snap-fit.

Other aspects of the invention will be made apparent from the description that follows and the drawings appended hereto.

### Description of the Drawings

A preferred embodiment of the rear-collision protection system according to the present invention will be described in greater detail with reference to the drawings appended hereto. These drawings show the following:

Figure 1 is a perspective view of the rear-collision protection system according to the present invention;

Figure 2 is a cross-section, through a mounting (an elbow lever), together with a collision roller (which is shown in horizontal cross section);

Figure 3 is a cross-section through a mounting (an elbow lever) together with a collision roller, the view being taken through a vertical cross-section along the line B-B shown in Figure 2; and

Figure 4 is an enlarged cross-section of the collision roller and mounting, shown in Figure 2.

### Description of the Preferred Embodiment(s)

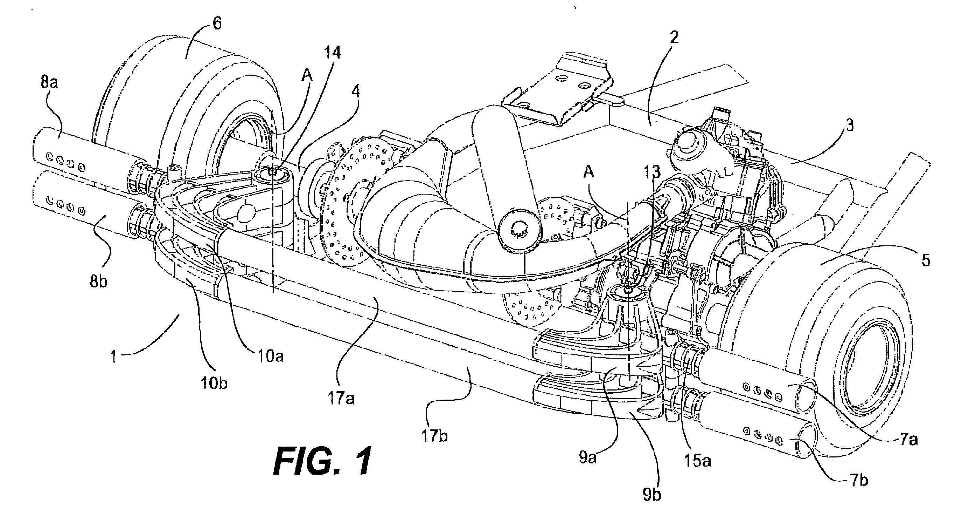

Figure 1 shows a rear-collision protection system 1 for a vehicle, particularly a kart, that has at least one rear wheel and is intended for motor sports. While the entirety of the vehicle is not shown because such is not necessary to understand the invention, essentially, the vehicle comprises a vehicle chassis or frame 2 onto which an engine 3 is mounted. Preferably, the engine 3 is an internal combustion engine, but any other suitable engine may be substituted therefor. The engine 3 drives a rear-wheel drive shaft 4. Two rear wheels 5, 6 are mounted on the outer ends of the drive shaft 4 in a manner known to those skilled in the art. While two wheels are preferred, it should be noted that the principles of the invention may apply equally well to a vehicle (e.g., motorcycle or three wheeled vehicle) with a single rear wheel or a vehicle with more than two rear wheels.

In one embodiment, the rear-collision protection system 1 comprises two collision rollers 7a, 7b, and 8a, 8b, which correspond to wheels 5 and 6 respectively that are installed so as to be spaced apart, one above the other. The collision rollers protect the rear surfaces of the rear wheels 5, 6 against impact from a following vehicle. Two mountings 9a, 9b, and 10a, 10b for the collision rollers 7a, 7b and 8a, 8b are associated with each rear wheel 5, 6, respectively.

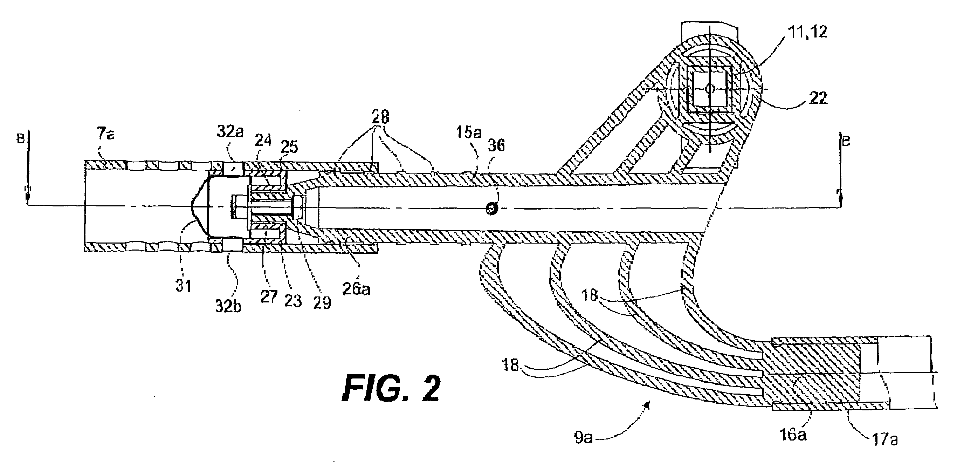

In the embodiment shown in the drawings, the mountings 9a, 9b and 10a, 10b are elbow levers that are attached flexibly to the vehicle chassis 2 so as to be able to pivot about vertical axes A. This torsionally flexible attachment is achieved very simply in that the elbow levers 9a, 9b and 10a, 10b interlock with section tubes 11 or 12 that are connected rigidly with the vehicle chassis 2, as shown in Figure 2.

Torsional flexibility is brought about by the elbow levers 9a, 9b and 10, 10b themselves. The elbow levers 9a, 9b, 10a) 10b are preferably made of an elastic material that is of low flexural strength, such as plastic. Any other type of torsionally flexible attachment, of course may be substituted therefor. For example, torsion springs (not shown) that are arranged around the axes A may provide the attachment. The elbow levers 9a, 9b and 10a, 10b are secured on the section tubes 11, 12, respectively, by means of bolted connections 13, 14 respectively.

In the embodiment illustrated in Figure 1, the elbow levers 9a, 9b and 10a, 10b are of identical construction. However, an identical construction is not required to practice the invention as would be appreciated by those skilled in the art.

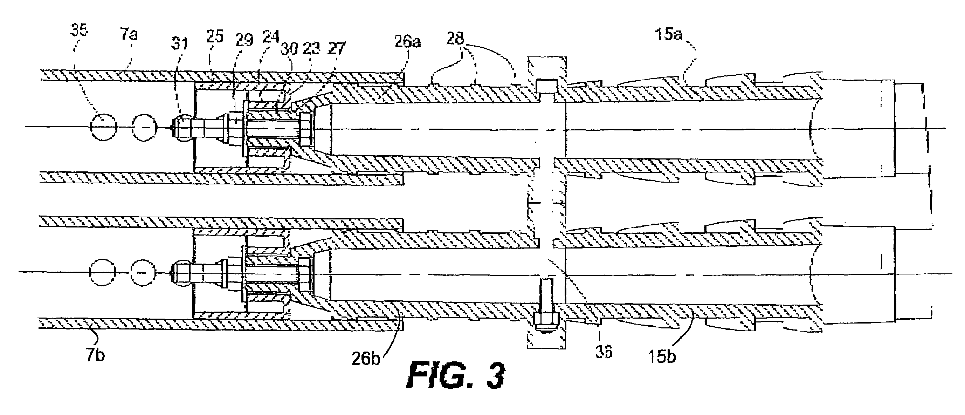

Since the illustrated elbow levers 9a, 9b and 10a, 10b are shown with an identical construction, Figures 2 and 3 show only the elbow lever 9a, which is exemplary of the remaining elbow levers 9b, 10a, and 10b.

The elbow lever 9a comprises two lever arms 15a, 16a, the lever arm 15a receiving the collision roller 7a and the elbow lever 16a forming the attachment point for the connecting tube 17a. The connecting tube 17a connects the two opposing elbow levers 9a and 10a to each other. The same applies to die elbow levers 9b, 10b, which are connected by the connecting tube 17b, It is preferred that the connecting tubes 17a and 17b be of a material that is of low flexural strength, preferably plastic, so that any impact against the rear of the vehicle can be cushioned.

In the example shown, the elbow levers 9a, 9b and 10a, 10b (shown in Figure 2 and Figure 3 using the elbow lever 9a as an example) consist of a plurality of four, angular leaf springs 18 that extend from the mounting 22 (axis A) out to the lever arm 16a. Naturally, any number of leaf springs 18 may be used so long as the elbow levers 9a, 9b, 10a, 10b provide sufficient impact resistance and flexibility.

The flexibility of the elbow levers 9a, 9b, 10a, 10b is believed to be greatly increased by this design configuration. If the front wheels of a following vehicle strike a rear wheel 5 or 6 of the vehicle in front, a first component of the impact energy is absorbed by the elasticity of the elbow levers 9a, 9b, 10a, 10b. A further part of the impact energy is then captured in the next phase of the collision, where the collision rollers 7a, 7b or 8a, 8b come into contact with whichever rear wheel 5, 6 has been hit. In this phase of the collision, the rear vehicle interacts directly with the particular rear wheel 5 or 6 through the collision rollers 7a, 7b or 8a, 8b, respectively. The front wheel of the rear vehicle can roll freely on the collision rollers 7a, 7b or 8a, 8b regardless of whether or not the collision rollers 7a, 7b or 8a, 8b come into contact with the rear wheel. With such an arrangement, it is believed that no vertical force component that could cause the rear vehicle to lift from the ground will be generated.

The collision roller 7a is secured to the lever arm 15a so as to be able to rotate (see Figure 2 and Figure 3). The same arrangement applies to the collision rollers 7b, 8a, 8b. To this end, a bearing roller 23 is arranged at the outer end of the lever arm 15a. This bearing roller comprises a cylindrical inner casing 24 and a cylindrical outer casing 25. The lever arm 15a comprises a shaft 26a that tapers at its unattached end to form a bearing journal 27. The bearing roller 23 is installed on the bearing journal 27, and can rotate thereon. Together with the bearing journal 27, the cylindrical inner casing 24 of the bearing roller 23 forms a journal bearing. Alternatively, a roller bearing (not shown) may be installed between the bearing roller 23 and the bearing journal 27.

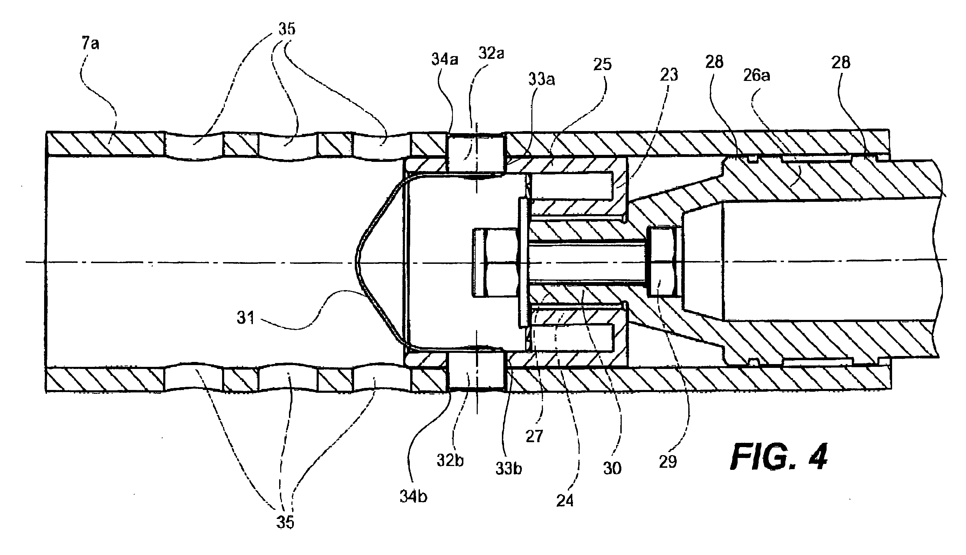

The collision roller 7a is positioned on the cylindrical outer casing 25 of the bearing roller 23, and joins positively to the bearing roller 23. To further improve the guidance of the collision roller 7a, the collision roller is also positioned part way over the lever shaft 26a. Stand-off rings 28 are disposed on the outer periphery of the lever shaft 26a. The stand-off rings 28 reduce the contact surface, and thereby the friction, between the collision roller 7a and the lever shaft 26a, as shown in Figs. 2 and 4.

It is preferred that the collision rollers 7a, 7b and 8a, 8b be manufactured from a tubular semiproduct (a pre-manufactured tubular material), because such material may be cut easily to the required length. The collision rollers 7a, 7b and 8a, 8b are thus of a uniform inside diameter. This means that the bearing roller 23 and the lever shaft 26a must be of essentially the same outside diameter.

The bearing roller 23 is secured on the bearing journal 27 by a central bolted connection 29. To this end, the bearing journal 27 incorporates a through bore 30 that is matched to the bolt 29. The lever shaft 26a is also hollow, so that the screw 29 may be mounted therein.

So that the collision rollers 7a, 7b and 8a, 8b may be adapted to different track widths of the rear wheels, the collision rollers 7a, 7b and 8a, 8b are secured on the mountings or elbow levers 9a, 9b and 10a, 10b respectively so as to be axially adjustable. This arrangement is shown in Figure 4, using the collision roller 7a as an example.

Referring to Figure 4, in each collision roller 7a there is a spring clip 31 that has a stud 32a, 32b at each end. Assisted by die restoring force of the spring clip 31, the two studs 32a, 32b snap into two corresponding bores 33a, 33b in the cylindrical outer casing 25 of the bearing roller 23 on the one hand, and into corresponding holes 34a, 34b in the collision roller 7a on the other. As a result of this fit, a positive connection (as well as a frictional connection) is formed. The axial position of the collision roller 7a can be varied so that the collision roller 7a incorporates a series of additional, alternative pairs of bores 35 that are arranged at discrete intervals, and into which the studs 32a, 32b may be snap-fit.

The two lever arms 15a, 15b or the lever shafts 26a, 26b are connected to each other by means of a bolted connection 36. Figure 3 illustrates this feature. The same connection applies to the lever arms on the opposite side of the vehicle. In the event of a collision with a following vehicle, the front wheel of the rearmost vehicle is discouraged from forcing the two collision rollers 7a, 7b apart. To this end, the bolted connection 36 preferably should be arranged so as to be as close as possible to the collision rollers 7a, 7b.

While the various figures of the drawings illustrate at least one embodiment of the invention, the invention is intended to encompass any and all embodiments that those skilled in the art would recognize as alternatives.

## Claims

1. A rear-collision protection system for a vehicle with a frame on which at least one rear wheel is disposed, the system comprising:
at least one mounting flexibly joined to the frame, the mounting being pivotable about a first axis; and
at least one collision roller supported on the at least one mounting, the collision roller being rotatable about a second axis,
wherein the at least one collision roller is disposed adjacent to the at least one rear wheel.

2. The rear-collision protection system according to claim 1, wherein the first axis is substantially vertical and the second axis is substantially horizontal.

3. The rear-collision protection system according to claim 1, wherein the at least one collision roller comprises two collision rollers, spaced apart, one above the other.

4. The rear-collision protection system of claim 1, wherein the at least one mounting comprises at least one elbow lever, the elbow lever comprising:
a first lever arm; and
a second lever arm,
wherein the first lever arm supports the at least one collision roller.

5. The rear-collision protection system of claim 4, wherein the at least one mounting comprises two elbow levers disposed laterally a predetermined distance from one another, the system further comprising:
a connecting tube extending between the second lever arms of each of the two elbow levers.

6. The rear-collision protection system of claim 4, wherein the at least one mounting comprises four elbow levers, two pairs of elbow levers being disposed laterally a predetermined distance from one another, the system further comprising:
two connecting tubes extending between the second lever arms of each of the two elbow levers in each pair of elbow levers.

7. The rear-collision protection system of claim 5, wherein the connecting tube is flexible.

8. The rear-collision protection system of the claim 4, wherein the elbow lever comprises at least two adjacent, angled leaf springs.

9. The rear-collision protection system of claim 8, wherein the elbow lever comprises four adjacent, angled leaf springs.

10. The rear-collision protection system of claim 1, wherein the collision roller is secured to the mounting and is axially adjustable.

11. The rear-collision protection system of claim 10, further comprising:
a spring clip disposed on the mounting within the collision roller, the collision roller denning at least one bore therethrough; and
at least one stud secured to the spring clip;
wherein the stud engages the bore assisted by the spring effect of the spring clip to form a connection between the mounting and the collision roller.
